# EUROPÄISCHE PATENTSCHRIFT

(11) **EP 0 895 033 B1**
(45) Veröffentlichungstag und Bekanntmachung des Hinweises auf die Patenterteilung: **10.09.2003**
(21) Anmeldenummer: 98114035.3
(22) Anmeldetag: 28.07.1998
(51) Int. Cl.: F24D 3/14

(54) **Temperierbare Gebäudewand und Verfahren zu deren Herstellung**
Temperature-controllable wall and method for making the wall
Paroi thermo-réglable et méthode de fabrication de la paroi

(30) Priorität: 28.07.1997 DE 19732408
(43) Veröffentlichungstag der Anmeldung: 03.02.1999
(73) Patentinhaber: Türk, Michael, 31157 Sarstedt (DE); Diedrichsen, Jens, Dipl.-Ing., 31180 Giesen (DE)
(72) Erfinder: Türk, Michael, 31157 Sarstedt (DE); Diedrichsen, Jens, Dipl.-Ing., 31180 Giesen (DE)
(74) Vertreter: Patentanwälte Thömen & Körner

(56) Entgegenhaltungen:
- CH-A- 606 937
- DE-U- 9 017 305
- FR-A- 2 455 143

## Beschreibung

Die Erfindung betrifft eine temperierbare Gebäudewand, welche in ihrem Inneren mit einer Mehrzahl von Rohrleitungen versehen ist, in welche flüssige Wärmemedien einspeisbar sind.

Gebäudewände, insbesondere Gebäudeaußenwände, müssen mehreren Anforderungen genügen. Zum einen sollen sie eine gute Dampfdurchlässigkeit besitzen, damit sich im Inneren des Gebäudes kein Schwitzwasser bilden kann, zum anderen sollen sie die im Inneren des Gebäudes herrschende Temperatur möglichst gut und lange halten können und das Innere des Gebäudes gegen die Außentemperatur abschirmen. Der zur Heizung oder Kühlung von Innenräumen benötigte Energieaufwand soll möglichst gering gehalten werden, wobei Energieverluste ebenso möglichst gering ausfallen sollen.

Eine bekannte temperierbare Gebäudewand der eingangs genannten Art besteht aus einem Innenwandspeicher und einem Klimaschild, wobei Innenwandspeicher und Klimaschild in einem Arbeitsgang hergestellt werden. Zwischen dem Innenwandspeicher und dem Klimaschild ist eine Isolierschicht angeordnet. Der Kern des Innenwandspeichers und der Kern des Klimaschildes bestehen dabei jeweils aus Normalbeton, wobei in die Kerne Rohrleitungen zum Einspeisen von Kühl- oder Wärmemedien angeordnet sind. Zur Herstellung derartiger bekannter Wände ist es nötig, diese stehend herzustellen, und zwar mit einer äußeren Verschalung aus Holzbrettern. Diese Verschalung kann nach der Herstellung der Wand, welche direkt vor Ort auf der Baustelle erfolgt, nicht mehr entfernt werden. Es wäre zwar denkbar, daß derartige Wände auch als Stahlbetonelemente gefertigt werden könnten, bei denen die Schalbretter anschließend entfernbar wären, jedoch wäre der Aufwand zur Herstellung einer derartigen Wand zu hoch.

In die Rohrleitungen derartiger bekannter Wände wird ein Wärmemedium eingespeist, das seine Wärme aus der Erdwärme, von Sonnenkollektoren oder aus Oberflächenwasser, beispielsweise aus einem Fließgewässer, bezieht.

Das äußere Klimaschild derartiger bekannter Wände dient der Voraufheizung bzw. der Abpufferung zwischen der Außentemperatur und dem Innenwandspeicher. Hierbei wird das Gebäude als Massenspeicher genutzt. Bedingt durch die Materialeigenschaften des Normalbetons, besitzen derartige Gebäudewände eine gute Wärmespeicherfähigkeit, jedoch eine schlechte Heizeigenschaft, da der Normalbeton nur relativ wenig Wärme abgibt bzw. da der Normalbeton in seinem Reaktionsverhalten bezüglich der Abgabe von Wärme an die Umgebung zu träge ist.

Ein weiterer Nachteil von Normalbeton ist seine geringe Dampfdiffusionsoffenheit, so daß in Wänden aus Normalbeton eine zusätzliche Lüftung vorgesehen sein muß, um den Austausch von Wasserdampf zu gewährleisten.

Nachteilig bei derartigen Gebäudewänden ist ferner, daß sie nur vor Ort hergestellt und nicht vorgefertigt werden können, daß der Aufwand zur Herstellung einer derartigen Wand sehr hoch ist und daß nach Fertigstellung die Schalbretter an der Wand verbleiben müssen, was nicht immer erwünscht ist. Zudem sind derartige Wände sehr schwer, was unter Umständen statische Probleme mit sich bringen kann. Ferner ist der Wirkungsgrad derartiger Wände, bezogen auf die Isolierungseigenschaften, nicht befriedigend.

Aus der DE 32 09 520 A1 ist ein Betonbauelement mit integrierten Heizkanälen bekannt, daß aus einem Einkornbeton gemäß der DIN-Norm 4219 besteht, wobei dem Einkornbeton Zuschlagsstoffe in Form von geschäumten Schaumkunststoffpartikeln enthält, in welchen eine Rohrschlange angeordnet ist. Bei diesem Betonbauelement handelt es sich um eine als Fertigteil ausgebildete Hohlplatte, welche durch die dort beschriebene Ausgestaltung besonders gut gegen Wärmerißbildungen geschützt sein soll.

Ein weiterer Nachteil der bislang bekannten temperierbaren Gebäudewände ist darin zu sehen, daß sie eine relativ hohe und lange Vorlauftemperatur benötigen, bis sie die gewünschte Temperatur nach außen abgeben. Die Lösung dieses Problems ist bislang darin gesehen worden, die Rohrleitungen des Wärmemediums möglichst weit zur Innenseite der Gebäudeaußenwand hin zu verlegen, d.h. die Rohrleitungen liegen dann nur etwa 20 mm unter der Oberfläche der Gebäudewand. Hierdurch kann es aber durch äußere Gewaltanwendung leicht zu Beschädigungen der Rohrleitungen kommen, beispielsweise, wenn ein Nagel in die Gebäudewand eingeschlagen wird.

Aufgabe der Erfindung ist es, eine Gebäudewand der eingangs genannten Art zu schaffen, die einfach und preiswert hergestellt und vorgefertigt werden kann, die zur Schaffung eines günstigen Innenraumklimas geeignet ist und deren Rohrleitungen unempfindlich gegen äußere Einflüsse sind.

Diese Aufgabe wird mit einer temperierbaren Gebäudewand gelöst, welche die Merkmale des Patentanspruchs 1 aufweist.

Erfindungsgemäß ist die Gebäudewand massiv ausgeführt und besteht aus einem haufwerksporigen Leichtbeton. Ferner dient die erfindungsgemäße Gebäudewand als Konvektor, wobei die Gebäudewand eine Dicke von mindestens 150 mm aufweist und wobei die Rohrleitungen im Abstand von 50 - 75 mm zu einer Außenseite der Gebäudewand in dieser angeordnet sind.

Es hat sich auf überraschend einfache Weise gezeigt, daß ein sehr günstiges Rauminnenklima geschaffen werden kann, wenn eine Gebäudewand aus einem haufwerksporigen Leichtbeton gemäß der DIN-Norm 4232 hergestellt wird. Derartigen Leichtbetonen ist man bislang bei der Herstellung von Gebäudewänden mit Vorurteilen begegnet, insbesondere wurde deren mäßige Festigkeit als Nachteil angesehen. Dies liegt daran, daß Leichtbeton, bedingt durch seine großen Poren, seine geringe Masse und durch seine geringe Dichte, nur ein schlechter Wärmespeicher ist.

Diese Eigenschaften des Leichtbetons lassen sich insofern jedoch sehr gut nutzen, da er sehr gute Abstrahlungseigenschaften aufweist. Wird beispielsweise zum Aufheizen eines Gebäudes ein aufgeheiztes Wärmemedium durch die Rohrleitungen der erfindungsgemäßen Gebäudewand geleitet, strahlt die Wärme aktiv in den Innenraum ab, so daß die Gebäudewand insgesamt als Konvektor arbeitet. Hierdurch läßt sich ein sehr gutes Innenraumklima schaffen, vorteilhafterweise in Kombination mit einer Fußbodenheizung.

Die mäßige Festigkeit des haufwerksporigen Leichtbetons kann insofern auch als Vorteil der erfindungsgemäßen temperierbaren Gebäudewand angesehen werden, als daß hier, im Gegensatz zu einer aus der DE 32 09 520 A1 bekannten Gebäudewand aus Einkornbeton, keine zusätzlichen Maßnahmen nötig sind, um Rißbildungen oder Risse zu verhindern.

Im Gegensatz zu herkömmlichen Fußbodenheizungen, welche zumeist in einem Estrich aus Normalbeton verlegt sind, benötigt die erfindungsgemäße Gebäudewand durch die rasche Erwärmung des Leichtbetons auch nur eine kurze Vorlaufzeit zur Erwärmung, beziehungsweise ermöglicht eine schnellere Abkühlung. Durch die gegenüber Normalbeton geringe Masse und Dichte besitzt der haufwerksporige Leichtbeton eine geringe Massenträgheit auf, wodurch sich eine gutes Temperaturregelverhalten ergibt. Normalbeton weist eine Dichte von etwa 2,0 - 2,5 t/m³ auf, haufwerksporiger Leichtbeton dagegen eine Dichte von etwa 0,5 - 1,6 t/m³.

Bestehen beispielsweise alle Wände eines Gebäudes aus den erfindungsgemäßen Gebäudewänden, wird ein allseits geschlossenes Heizsystem geschaffen, das ein als angenehm empfundenes Raumklima schafft, und dies innerhalb einer sehr kurzen Zeit bei nur geringer Vorlauftemperatur. Beispielsweise ist es nur noch nötig, die Gebäudewand auf 22° C aufzuheizen, um den von den Gebäudewänden umschlossenen Raum auf 20° C zu erwäremen, wobei durch das als angenehm empfundene Raumklima den sich im Inneren des Gebäudes aufhaltenden Personen das Gefühl vermittelt wird, daß 23° C herrschen würden. Hierbei spricht man von einer "gefühlten Temperatur", also dem Faktor aus Luftfeuchtigkeit und Temperatur.

Hierdurch ergibt sich ein weiterer Vorteil, nämlich die Reduzierung der Heizungs- Vorlauftemperatur und dadurch eine Senkung der Energiekosten. Beispielsweise kann die erfindungsgemäße Gebäudewand mit einem permanenten Energiebedarf von 8 kW betrieben werden, während bei herkömmlichen Heizsystemen zumindest ein temporärer Energiebedarf von 21 kW nötig ist. Insgesamt ergibt sich beim Betrieb von Heizsystemen durch Gebäudewände gemäß der Erfindung eine günstigere Energiebilanz.

Ferner werden durch die gleichzeitige Wärmeabstrahlung vom Fußboden und von mehreren erfindungsgemäßen Gebäudewänden die sonst üblichen heizungsbedingten Luftverwirbelungen vermieden, wodurch keine nachteiligen Zugerscheinungen auftreten.

In einer vorteilhaften Ausgestaltung der Erfindung weist der Leichtbeton als Zusatzstoff Blähton, Hüttenbims, Schlacke oder Lava auf. Je nach dem, welche Eigenschaften der zu ersteilenden Gebäudewand im Vordergrund stehen, wird man ein geeigneten Zusatzstoff für den Leichtbeton wählen. Hierbei hat sich Blähton als besonders geeignet erwiesen, da Blähton eine hohe Dampfdiffusion gewährleistet und eine gute Wärmeaufnahme- und Wärmeabgabefähigkeit aufweist. Eine zusätzliche Lüftung des Gebäudes ist daher nicht notwendig.

Wird statt eines aufgeheizten ein gekühltes Wärmemedium verwendet, können die Innenräume auch aktiv gekühlt werden, was insbesondere in Industriegebäuden erwünscht ist.

In einer weiteren Ausgestaltung der Erfindung ist die Gebäudewand an ihrer Außenseite mit einer zusätzlichen Wärmeisolierung versehen. Dies kann inbesondere dann wünschenswert sein, wenn die erfindungsgemäße Gebäudewand als Außenwand des Gebäudes fungiert. Hierdurch lassen sich die Energiekosten weiter minimieren.

Bevorzugterweise besteht die Isolierung aus einer Isolierplatte, auf deren Außenseite eine Mehrzahl von Rohrleitungen aufgesetzt ist, in welche Wärmemedien einspeisbar sind, wobei auf die Rohrleitungen eine Deckplatte aufgesetzt ist.

Bei dieser Ausgestaltung fungiert die Isolierung als zusätzliches Kälteschild, um die Energiekosten weiter reduzieren zu können. Hierbei wirkt die Isolierung als Puffer zwischen Außen- und Innenraumtemperatur.

Vorteilhafterweise besteht die Isolierplatte aus einem mineralischem Dämmstoff, beispielsweise aus Steinwolle, oder aus Polystyrol und die Abdeckplatte aus Polystyrol oder aus einer handelsüblichen Fassadenplatte, beispielsweise aus Holz, Riemchen oder Klinker, oder aus Mauerwerk.

In einer Weiterbildung der Erfindung wird ein Verfahren zur Herstellung einer erfindungsgemäßen Gebäudewand vorgeschlagen, bei dem in einem ersten Schritt in eine waagerechte Form eine erste Schicht eines haufwerksporigen Leichtbetons gegossen und verdichtet wird, wobei die erste Schicht eine Dicke von 60 - 75 mm aufweist, bei dem in einem zweiten Schritt eine Transportbewehrungsmatte auf die erste Schicht aufgelegt wird, daß in einem dritten Schritt die Rohrleitungen auf die Transportbewehrungsmatte aufgelegt werden, und bei dem in einem vierten Schritt eine zweite Schicht eines haufwerksporigen Leichtbetons auf die Rohrleitungen, die Transportbewehrungsmatte und auf die erste Schicht verbracht und verdichtet wird, wobei die zweite Schicht eine Dicke von 60 - 250 mm aufweist.

Als Vorteil dieses Verfahrens zu Herstellung einer erfindungsgemäßen Gebäudewand ist es, daß sie sich hierdurch fabrikmäßig vorfertigen läßt. Hierbei werden die Gebäudewände liegend erstellt, was bei bislang bekannten gattungsgemäßen Gebäudewänden nicht der Fall war. Diese mußten, wie eingangs erwähnt, auf der Baustelle vor Ort erstellt werden. Werden die erfindungsgemäßen Gebäudewände fabrikmäßig vorgefertigt, genügt es, die vorgefertigten Gebäudewände, welche dann bereits mit Fenster- und Türausschnitten versehen sein können, zur Baustelle zu transportieren und dort miteinander zu verbinden.

Hierbei kann gemäß einer vorteilhaften Weiterbildung des Verfahrens vorgesehen sein, daß zusammen mit den Rohrleitungen elektrische Leitungen, Kabel und dergleichen auf die Transportbewehrungsmatte, welche unter der Bezeichnung Q 131 bekannt und erhältlich ist, aufgelegt werden. Hierbei können die Rohrleitungen, welche aus Kunststoff bestehen können, und die elektrischen Leitungen, Kabel Hüllrohre, Gasanschluß- und -verteilerrohre mittels Kabelbindern an die Transportbewehrungsmatte angebunden oder mit dieser verknotet werden.

Weitere Vorteile und Ausgestaltungen der Erfindung ergeben sich aus der nachfolgenden Beschreibung, der Zeichnung und den Ansprüchen. In der Zeichnung zeigt:
- Fig. 1: ein erstes Ausführungsbeispiel der erfindungsgemäßen Gebäudewand im Querschnitt,
- Fig. 2: ein zweites Ausführungsbeispiel der erfindungsgemäßen Gebäudewand im Querschnitt, und
- Fig. 3: ein drittes Ausführungsbeispiel der erfindungsgemäßen Gebäudewand im Querschnitt.

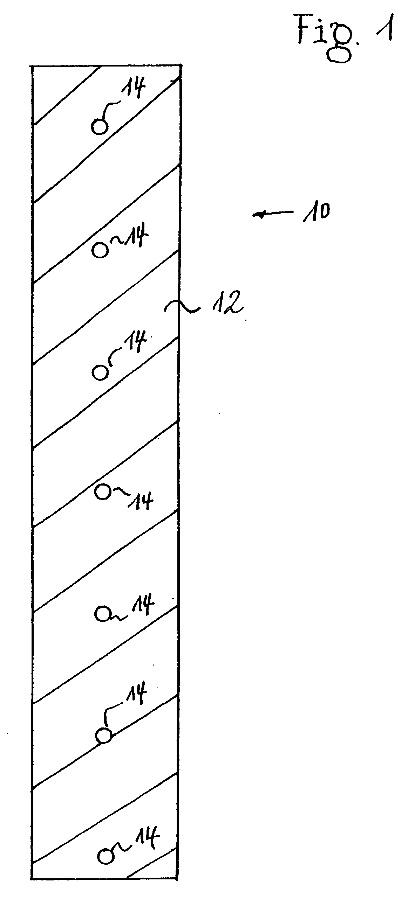

In Fig. 1 ist ein erstes Ausführungsbeispiel einer erfindungsgemäßen temperierbaren Gebäudewand 10 dargestellt. Die Form der Gebäudewand 10 richtet sich nach dem zu erstellenden Gebäude und ist frei wählbar. Die Stärke der Gebäudewand 10 beträgt im Ausführungsbeispiel etwa 15 bis 30 cm. Im Inneren 12 der Gebäudewand 10 ist eine Mehrzahl von Rohrleitungen 14 angeordnet. Diese sind untereinander zu einer Rohrschlange verbunden, in welche Wärmemedien eingespeist werden. Die Anzahl der Rohrleitungen 14 und die Form der Rohrschlange ist frei wählbar.

Die erfindungsgemäße Gebäudewand 10 wird derart hergestellt, daß eine liegende Form mit einer ersten Schicht eines feuchten haufwerksporigen Leichtbetons verfüllt und verfestigt wird, wobei in die Form, nachdem diese etwa zur Hälfte mit Leichtbeton gefüllt ist, eine nicht näher dargestellte, an sich bekannte Transportbewehrungsmatte auf den flüssigen oder halbfesten Leichtbeton plaziert wird. Auf diese wird dann die Rohrschlange 14 gelegt und mittels Kabelbindern mit der Transportbewehrungsmatte verknotet. Im Bedarfsfalle können auch elektrische Leitungen, Kabel und Hüllrohre auf die Transportbewehrungsmatte aufgelegt und mit dieser verknotet werden. Anschließend wird auf die Rohrleitungen 14, die Transportbewehrungsmatte und auf die erste Schicht eine zweite Schicht eines haufwerksporigen Leichtbetons verbracht und verfestigt.

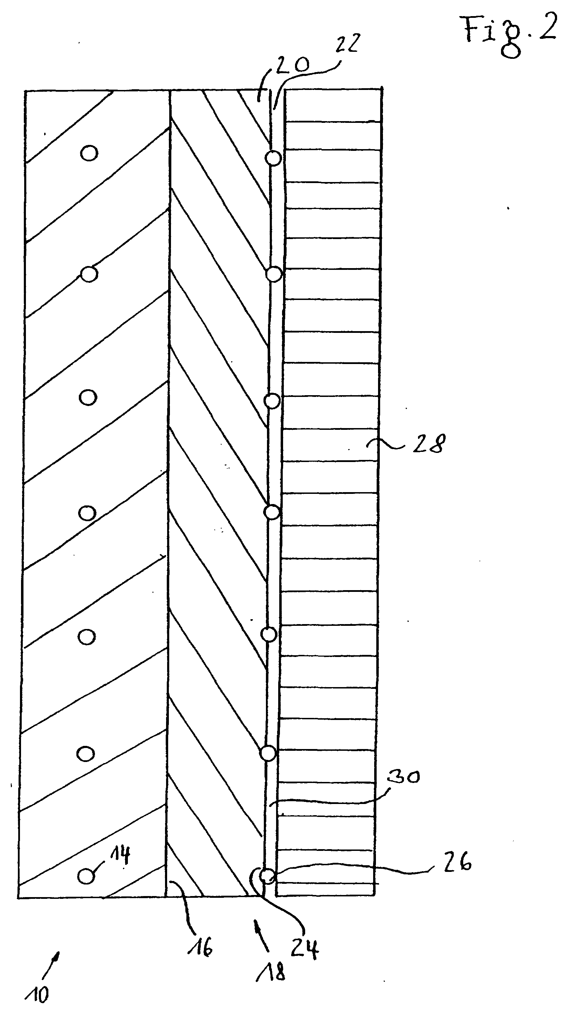

In Fig. 2 ist eine zweite Ausführungsform der erfindungsgemäßen temperierbaren Gebäudewand 10 im Querschnitt dargestellt. Auf eine Außenseite 16 der Gebäudewand 10 ist eine Isolierung 18 aufgesetzt. Diese Isolierung 18 besteht gemäß dem Ausführungsbeispiel der Gebäudewand 10 gemäß Fig. 2 aus einem als Isolierplatte dienenden Block 20 aus einem mineralischen Dämmstoff, beispielsweise aus Steinwolle. Die Außenseite 22 des Blocks 20 ist mit Ausnehmungen 24 versehen, in welche Rohrleitungen 26 eingesetzt sind. In diese Rohrleitungen 26 sind Wärmemedien einspeisbar. Vor der Außenseite 22 des Blocks 20 ist Mauerwerk 28, beispielsweise Klinker, vorgesetzt. Zwischen dem Mauerwerk 28 und der Außenseite 22 des Blocks 20 verbleibt dabei eine unverfüllte Luftschicht 30. Diese Luftschicht 30 dient zur Verhinderung von Schwitzwasser zwischen Block 20 und Mauerwerk 28.

Die Isolierung 18 dient im Ausführungsbeispiel gemäß Fig. 2 der Verhinderung von Wärmeabgabe nach außen.

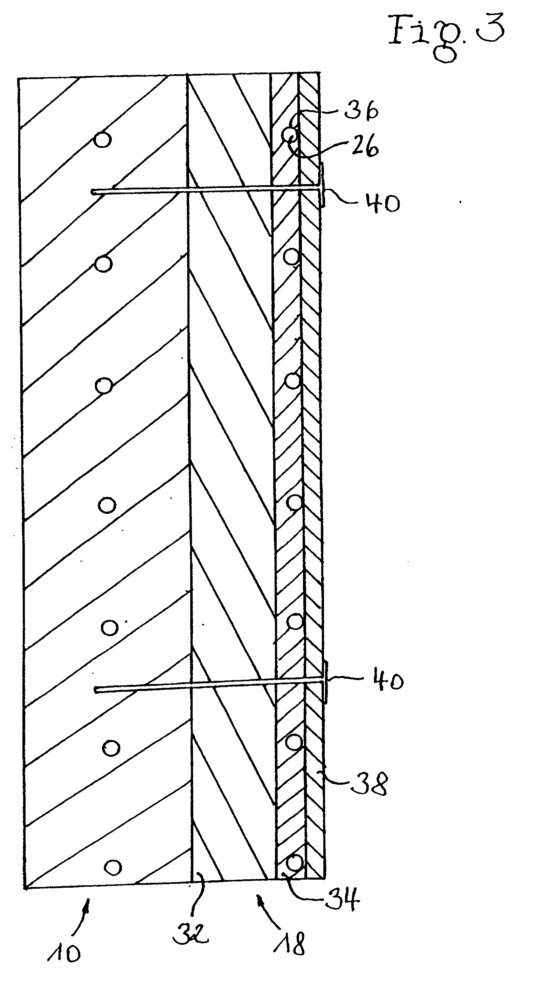

In Fig. 3 ist ein drittes Ausführungsbeispiel der erfindungsgemäßen Gebäudewand 10 im Querschnitt dargestellt. Diese weist ebenso wie das Ausführungsbeispiel in Fig. 2 eine Isolierung 18 auf. Im Gegensatz zum Ausführungsbeispiel gemäß Fig. 2 besteht die Isolierung 18 des Ausführungsbeispiels gemäß Fig. 3 aus einer Isolierplatte 32 aus Polystyrol und aus einer Trägerplatte 34 ebenfalls aus Polystyrol, welche Ausnehmungen 36 für Rohrleitungen 26 aufweist. Auf die Trägerplatte 34 und auf die Rohre 26 ist bündig eine Abdeckplatte 38 aufgesetzt. Diese Abdeckplatte 38 kann nach Fertigstellung des Gebäudes verputzt werden.

Die Isolierung 18 gemäß Fig. 3 ist mit Tellerdübeln 40 mit der Gebäudewand 10 verbunden.

## Patentansprüche

1. Temperierbare Gebäudewand, welche in ihrem Inneren mit einer Mehrzahl von Rohrleitungen versehen ist, in welche flüssige Wärmemedien einspeisbar sind, **dadurch gekennzeichnet, daß** die Gebäudewand (10) massiv ausgeführt ist und aus einem haufwerksporigen Leichtbeton besteht, und daß die Gebäudewand (10) als Konvektor ausgebildet ist, wobei die Gebäudewand (10) eine Dicke von mindestens 150 mm aufweist und wobei die Rohrleitungen (14) in einem Abstand von 50 - 75 mm zu einer Außenseite (16) der Gebäudewand (10) in dieser angeordnet sind, und daß die Gebäudewand fabrikmäßig vorgefertigt ist und ein Fertigelement bildet.

2. Temperierbare Gebäudewand nach Anspruch 1, **dadurch gekennzeichnet, daß** der Leichtbeton Blähton als Zusatzstoff aufweist.

3. Temperierbare Gebäudewand nach Anspruch 1, **dadurch gekennzeichnet, daß** der Leichtbeton Hüttenbims als Zusatzstoff aufweist.

4. Temperierbare Gebäudewand nach Anspruch 1, **dadurch gekennzeichnet, daß** der Leichtbeton Schlacke als Zusatzstoff aufweist.

5. Temperierbare Gebäudewand nach Anspruch 1, **dadurch gekennzeichnet, daß** der Leichtbeton Lava als Zusatzstoff aufweist.

6. Temperierbare Gebäudewand nach einem der Ansprüche 1 - 5, **dadurch gekennzeichnet, daß** die Gebäudewand (10) an ihrer Außenseite (16) mit einer Wärmeisolierung (18) versehen ist.

7. Temperierbare Gebäudewand nach Anspruch 6, **dadurch gekennzeichnet, daß** die Isolierung (18) aus einer Isolierplatte (20; 32) besteht, auf deren Außenseite (22) eine Mehrzahl von Rohrleitungen (26) aufgesetzt ist, in welche Wärmemedien einspeisbar sind, wobei auf die Rohrleitungen (26) eine Abdeckplatte (28; 38) aufgesetzt ist.

8. Temperierbare Gebäudewand nach Anspruch 7, **dadurch gekennzeichnet, daß** die Isolierplatte (20)aus einem mineralischen Dämmstoff besteht.

9. Temperierbare Gebäudewand nach Anspruch 7, **dadurch gekennzeichnet, daß** die Isolierplatte (32) aus Polystyrol besteht.

10. Temperierbare Gebäudewand nach Anspruch 7, **dadurch gekennzeichnet, daß** die Abdeckplatte (38) aus Polystyrol besteht.

11. Temperierbare Gebäudewand nach Anspruch 7, **dadurch gekennzeichnet, daß** die Abdeckplatte (28) aus Mauerwerk besteht.

12. Verfahren zur Herstellung einer temperierbaren Gebäudewand (10) nach einem der Ansprüche 1 - 11, **dadurch gekennzeichnet, daß** in einem ersten Schritt in eine waagerechte Form eine erste Schicht eines haufwerksporigen Leichtbeton gefüllt und verdichtet wird, wobei die erste Schicht eine Dicke von 60 - 75 mm aufweist, daß in einem zweiten Schritt eine Transportbewehrungsmatte auf die erste Schicht aufgelegt wird, daß in einem dritten Schritt die Rohrleitungen (14) auf die Transportbewehrungsmatte aufgelegt werden, und daß in einem vierten Schritt eine zweite Schicht eines haufwerksporigen Leichtbetons auf die Rohrleitungen (14), die Transportbewehrungsmatte und auf die erste Schicht verbracht und verdichtet wird, wobei die zweite Schicht eine Dicke von 60 - 250 mm aufweist.

13. Verfahren nach Anspruch 12, **dadurch gekennzeichnet, daß** zusammen mit den Rohrleitungen (14) elektrische Leitungen, Kabel und dergleichen auf die Transportbewehrungsmatte aufgelegt werden.

## Claims

1. Thermostatically controllable building wall provided in its interior with a plurality of pipes into which can be fed liquid heating media, **characterized in that** the building wall (10) has a solid construction and comprises an agglomerate-pored lightweight concrete and that the building wall (10) is constructed as a convector, the building wall (10) having a thickness of at least 150 mm and in which the pipes (14) have a spacing from the outside (16) of the building wall (10) of 50 to 75 mm and that the building wall is prefabricated and forms a finished element.

2. Thermostatically controllable building wall according to claim 1, **characterized in that** the lightweight concrete has expanded clay has an admixture.

3. Thermostatically controllable building wall according to claim 1, **characterized in that** the lightweight concrete has blast furnace slag as an admixture.

4. Thermostatically controllable building wall according to claim 1, **characterized in that** the lightweight concrete has clinker as an admixture.

5. Thermostatically controllable building wall according to claim 1, **characterized in that** the lightweight concrete has lava as an admixture.

6. Thermostatically controllable building wall according to one of the claims 1 to 5, **characterized in that** the outside (16) of the building wall (10) is provided with a thermal insulation (18).

7. Thermostatically controllable building wall according to claim 6, **characterized in that** the insulation (18) comprises an insulating plate (20; 32), on whose outside (22) is placed a plurality of pipes (26) into which can be fed heating media, a cover plate (28; 38) being placed on the pipes (26).

8. Thermostatically controllable building wall according to claim 7, **characterized in that** the insulating plate (20) comprises a mineral insulating material.

9. Thermostatically controllable building wall according to claim 7, **characterized in that** the insulating plate (32) comprises polystyrene.

10. Thermostatically controllable building wall according to claim 7, **characterized in that** the cover plate (32) comprises polystyrene.

11. Thermostatically controllable building wall according to claim 7, **characterized in that** the cover plate (28) comprises masonry.

12. Method for the manufacture of a thermostatically controllable building wall (10) according to one of the claims 1 to 11, **characterized in that** in a first step an agglomerate-pored lightweight concrete is filled into and compacted in a horizontal mould, the first layer having a thickness of 60 to 75 mm, that in a second step a transportation reinforcement mat is placed on the first layer, that in a third step the pipes (14) are placed on the transportation reinforcement mat and that in a fourth step a second layer of an agglomerate-pored lightweight concrete is brought onto the pipes (14), transportation reinforcement mat and first layer and compacted, the second layer having a thickness of 60 to 250 mm.

13. Method according to claim 12, **characterized in that** together with the pipes (14), electrical lines, cables, etc. are placed on the transportation reinforcement mat.

## Revendications

1. Pan de mur de bâtiment pouvant être chauffé, équipé à l'intérieur de plusieurs conduites, dans lesquelles peut être introduit un agent thermique liquide, **caractérisé en ce que** le pan de mur de bâtiment (10) est construit en dur, qu'il est en béton léger de texture caverneuse et que le pan de mur de bâtiment (10) est conçu comme convecteur, l'épaisseur du pan de mur étant de 150 mm au moins et les conduites (14) étant disposées dans ce pan de mur à une distance comprise entre 50 et 75 mm par rapport à la face extérieure (16) du pan de mur de bâtiment (10) et que celui-ci est préfabriqué en usine et forme un élément fini.

2. Pan de mur de bâtiment pouvant être chauffé suivant la revendication 1, **caractérisé en ce que** le béton léger contient de l'argile expansé comme additif.

3. Pan de mur de bâtiment pouvant être chauffé suivant la revendication 1, **caractérisé en ce que** le béton léger contient du laitier mousseux comme additif.

4. Pan de mur de bâtiment pouvant être chauffé suivant la revendication 1, **caractérisé en ce que** le béton léger contient de la scorie comme additif.

5. Pan de mur de bâtiment pouvant être chauffé suivant la revendication 1, **caractérisé en ce que** le béton léger contient de la lave comme additif.

6. Pan de mur de bâtiment pouvant être chauffé suivant une des revendications 1 à 5, **caractérisé en ce que** le pan de mur du bâtiment (10) est équipé d'une isolation thermique (18) sur sa face extérieure (16).

7. Pan de mur de bâtiment pouvant être chauffé suivant la revendication 6, **caractérisé en ce que** l'isolation (18) est constituée d'une plaque isolante (20, 32), sur la face extérieure (22) de laquelle sont posées plusieurs conduites (26), dans lesquelles peut être introduit un agent thermique, une plaque de recouvrement (28, 38) étant placée sur les conduites (26).

8. Pan de mur de bâtiment pouvant être chauffé suivant la revendication 7, **caractérisé en ce que** la plaque isolante (20) est en un matériau isolant minéral.

9. Pan de mur de bâtiment pouvant être chauffé suivant la revendication 7, **caractérisé en ce que** la plaque isolante (32) est en polystyrène.

10. Pan de mur de bâtiment pouvant être chauffé suivant la revendication 7, **caractérisé en ce que** la plaque de recouvrement (38) est en polystyrène.

11. Pan de mur de bâtiment pouvant être chauffé suivant la revendication 7, **caractérisé en ce que** la plaque de recouvrement (28) est en maçonnerie.

12. Procédé de fabrication d'un pan de mur de bâtiment pouvant être chauffé (10) suivant une des revendications 1 à 11, **caractérisé en ce qu**'au cours d'une première étape, une première couche de béton léger de texture caverneuse est versée dans un moule horizontal et compactée, l'épaisseur de cette première couche étant comprise entre 60 et 75 mm, qu'au cours d'une seconde étape, un treillis d'armature de transport est posé sur la première couche, qu'au cours d'une troisième étape, les conduites (14) sont posées sur le treillis d'armature de transport, et qu'au cours d'une quatrième étape une seconde couche de béton léger à texture caverneuse est appliquée sur les conduites (14), le treillis d'armature de transport et la première couche, puis compactée, l'épaisseur de la seconde couche étant comprise entre 60 et 250 mm.

13. Procédé suivant la revendication 12, **caractérisé en ce que** non seulement les conduites (14) sont posées sur le treillis d'armature de transport, mais encore des lignes électriques, des câbles et d'autres éléments similaires.
